(19) Europäisches Patentamt
European Patent Office
Office européen des brevets

(11) **EP 2 315 721 B1**

(12) **FASCICULE DE BREVET EUROPEEN**

(45) Date de publication et mention de la délivrance du brevet:
**10.04.2013 Bulletin 2013/15**

(21) Numéro de dépôt: **09784313.0**

(22) Date de dépôt: **29.07.2009**

(51) Int Cl.:
**C01G 53/00** (2006.01)   **C01G 41/00** (2006.01)
**B01J 23/00** (2006.01)   **B01J 27/188** (2006.01)
**B01J 37/02** (2006.01)   **B01J 23/888** (2006.01)
**B01J 37/30** (2006.01)   **C10G 45/08** (2006.01)
**C10G 47/12** (2006.01)   **C10G 49/04** (2006.01)

(86) Numéro de dépôt international:
**PCT/FR2009/000941**

(87) Numéro de publication internationale:
**WO 2010/020714 (25.02.2010 Gazette 2010/08)**

(54) **HETEROPOLYANION DE TYPE KEGGIN LACUNAIRE A BASE DE TUNGSTENE POUR L'HYDROCRAQUAGE**

AUF WOLFRAM BASIERENDES HETEROPOLYANION VOM LEERSTELLEN-KEGGIN-TYP FÜR DAS HYDROCRACKEN

TUNGSTEN-BASED VACANCY-KEGGIN-TYPE HETEROPOLYANION FOR HYDROCRACKING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.08.2008 FR 0804642**

(43) Date de publication de la demande:
**04.05.2011 Bulletin 2011/18**

(73) Titulaire: **IFP Energies nouvelles**
**92852 Rueil-Malmaison Cedex (FR)**

(72) Inventeurs:
• **BONDUELLE, Audrey**
**69340 FRANCHEVILLE (FR)**
• **BERTONCINI, Fabrice**
**F-69007 Lyon (FR)**
• **BEN TAYEB, Karima**
**F-60280 Margny-les-Compiegne (FR)**
• **LAMONIER, Carole**
**F-59280 Armentières (FR)**
• **FOURNIER, Michel**
**F-59800 Lille (FR)**
• **PAYEN, Edmond**
**F-59144 Jenlain (FR)**

(56) Documents cités:
WO-A-97/47385        US-A- 2 547 380
US-A1- 2003 171 604

• SANTOS I C M S ET AL: "Association of Keggin-type anions with cationic meso-substituted porphyrins: synthesis, characterization and oxidative catalytic studies" JOURNAL OF MOLECULAR CATALYSIS. A, CHEMICAL, ELSEVIER, AMSTERDAM, NL, vol. 231, no. 1-2, 20 avril 2005 (2005-04-20), pages 35-45, XP004775154 ISSN: 1381-1169 cité dans la demande
• NIU J-Y ET AL: "Two one-dimensional mono-substituted heteropolytungstates based on Keggin anion units" JOURNAL OF SOLID STATE CHEMISTRY, ORLANDO, FL, US, vol. 177, no. 10, 1 octobre 2004 (2004-10-01), pages 3411-3417, XP004609010 ISSN: 0022-4596 cité dans la demande
• J-W ZHAO, H-P JIA, J. ZHANG, S-T ZHENG, G-Y YANG: "A Combination of Lacunary Polyoxometalates and High-Nuclear Transition-Metal Clusters under Hydrothermal Conditions. Parts II: From Double Cluster, Dimer, and Tetramer to Three-Dimensional Frameworks" CHEM. EUR. J., vol. 13, 2007, pages 10030-10045, XP002525499

**EP 2 315 721 B1**

**Description**

La présente invention décrit un hétéropolycomposé constitué d'un sel de Nickel d'un hétéropolyanion de type Keggin lacunaire comprenant dans sa structure du tungstène de formule

$$Ni_{x+y/2}AW_{11-y}O_{39-5/2y}, zH_2O$$

dans laquelle Ni est le nickel,
A est choisi parmi le phosphore, le silicium et le bore,
W est le tungstène,
O est l'oxygène,
y = 0 ou 2
x = 3.5 si A est le phosphore,
x = 4 si A est le silicium
x = 4.5 si A est le bore
et x = m/2+2 pour la suite,
et z est un nombre compris entre 0 et 36 et m est égal 3 si A est le phosphore, m est égal 4 si A est le silicium et m est égal à 5 si A est le bore, dans lequel ledit hétéropolycomposé ne présente aucun atome de Nickel en substitution d'un atome de tungstène dans sa structure, lesdits atomes de Nickel étant placés en position de contre ion dans la structure dudit composé.

La présente invention décrit également un procédé de préparation dudit hétéropolycomposé constitué d'un sel de Nickel d'hétéropolyanions de type keggin lacunaire comprenant dans sa structure du tungstène.
La présente invention a également pour objet un catalyseur comprenant ledit hétéropolycomposé et les procédés d'hydrocraquage, d'hydroconversion et/ou d'hydrotraitement mettant en oeuvre lesdits catalyseurs.

En particulier, l'invention concerne l'hydrocraquage de charges hydrocarbonées contenant par exemple des composés aromatiques, et/ou oléfiniques, et/ou naphténiques, et/ou paraffiniques y compris les charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

L'invention concerne également l'hydrotraitement de charges hydrocarbonées telles que les coupes pétrolières, les coupes issues du charbon ou les hydrocarbures produits à partir du gaz naturel. Ces charges hydrocarbonées comportent de l'azote et/ou du soufre et/ou des composés aromatiques et/ou oléfiriques et/ou naphténiques et/ou paraffiniques, lesdites charges contenant éventuellement des métaux et/ou de l'oxygène et/ou du soufre. Par hydrotraitement on entend les réactions d'hydrogénation, d'hydrodésulfuration, d'hydrodésazotation, d'hydrodéoxygénation, d'hydrodésaromatisation et d'hydrodémétallation.

**État de la technique antérieure**

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.
L'hydrocraquage est un procédé qui tire sa flexibilité de trois éléments principaux qui sont les conditions opératoires utilisées, les types de catalyseurs employés et le fait que l'hydrocraquage de charges hydrocarbonées peut être réalisé en une ou deux étapes.
Les catalyseurs d'hydrocraquage utilisés dans les procédés d'hydrocraquage sont tous du type bifonctionnel associant une fonction acide à une fonction hydro-déshydrogénante. La fonction acide est apportée par des supports dont les surfaces varient généralement de 150 à 800 $m^2.g^{-1}$ et présentant une acidité superficielle, telles que les alumines halogénées (chlorées ou fluorées notamment), les combinaisons d'oxydes de bore et d'aluminium, les aluminosilicates mésoporeux amorphes et les zéolithes. La fonction hydro-déshydrogénante est apportée soit par un ou plusieurs métaux du groupe VIB de la classification périodique des éléments, soit par une association d'au moins un métal du groupe VIB de la classification périodique avec au moins un métal du groupe VIII.

L'équilibre entre les deux fonctions acide et hydro-déshydrogénante est un des paramètres qui régit l'activité et la sélectivité du catalyseur. Une fonction acide faible et une fonction hydro-déshydrogénante forte donnent des

2

catalyseurs peu actifs, travaillant à une température en général élevée (supérieure ou égale à 390-400°C) et avec une vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydro-déshydrogénante faible donnent des catalyseurs actifs, mais présentant de moins bonnes sélectivités en distillats moyens."

Un type de catalyseurs conventionnels d'hydrocraquage est à base de supports amorphes modérément acides, tels les aluminosilicates par exemple. Ces systèmes sont utilisés pour produire des distillats moyens de bonne qualité, et éventuellement, des bases huiles. Ces catalyseurs sont par exemple utilisés dans les procédés en deux étapes.

Le problème posé à l'homme du métier est l'obtention de hautes performances catalytiques des procédés d'hydrocraquage, notamment en terme d'activité et de sélectivité en distillats moyens, tout en garantissant une réalisation industriellement satisfaisante. Ainsi, bien que de bonnes performances puissent être obtenues en améliorant les caractéristiques texturales des catalyseurs et de leur matrice poreuse les supportant, les performances de ces catalyseurs sont également liées à la nature de la phase hydrogénante. L'activité hydrogénante va ainsi jouer un rôle très important dans les réactions d'hydrodéazotation (HDN), d'hydrodéaromatisation (HDA), d'hydrodésulfuration (HDS) et sur la stabilité du catalyseur.

Le couple NiW est reconnu comme étant le couple de métaux des groupes VIB et VIII optimal pour l'hydrogénation des aromatiques ainsi que pour l'hydrodéazotation, fonctions clés pour l'hydrocraquage. Malgré les fortes teneurs en NiW déposées, par voie classique", à l'aide de précurseurs habituels (métatungstate d'ammonium et nitrate de nickel) sur le support et malgré les études paramétriques concernant les étapes de préparation, nous ne parvenons pas à 1) contrôler la dispersion et 2) la morphologie des feuillets et 3) à optimiser leur taux de promotion sur ces supports : ce sont les clefs essentielles pour largement renforcer le pouvoir hydrogénant de la phase active et augmenter ainsi le rendement en Distillats Moyens dans le procédé d'Hydrocraquage. Un des challenges scientifiques de ces dernières années consiste à optimiser la phase hydrogénante déposée sur des supports variés de catalyseurs pour l'hydrocraquage.

En voulant résoudre ces problèmes, la demanderesse a mis en évidence et ceci de manière inattendue, que la préparation d'oxydes de type NiW à partir du sel de Nickel d'un hétéropolyanion de type keggin lacunaire comprenant du tungstène déposé sur des supports amorphes modérément acides, tels que les supports de type aluminosilicates présente un avantage en terme de pouvoir hydrogénant : les catalyseurs ainsi préparés présentent des performances catalytiques améliorées dans les procédés d'hydrocraquage. Elle a ainsi découvert de manière surprenante que l'emploi de l'hétéropolycomposé de formule $Ni_{x+y/2}AW_{11-y}O_{39-5/2y}$, $zH_2O$ tel que défini ci dessus et plus particulièrement l'emploi des hétéropolycomposés de formule $Ni_4SiW_{11}O_{39}$ et de formule $Ni_5SiW_9O_{34}$ conduit à des performances catalytiques inattendues en hydrocraquage/hydroconversion et hydrotraitement. Plus précisément la présente invention concerne un procédé de préparation desdits sels de Ni d'hétéropolyanions de type keggin lacunaire comprenant du W et de leur utilisation au cours de la préparation de catalyseurs. Ces hétéropolyanions sont mis en évidence par différentes techniques physico-chimiques.

La richesse de la chimie du tungstène autorise la préparation, d'espèces hétéropolytungstites plus ou moins substituées et composées des éléments à déposer. Il s'agit donc d'unités chimiques dont le degré de condensation des octaèdres de tungstène est contrôlé et où le Nickel est intimement lié à la structure. Ces nouveaux matériaux utilisés pour la préparation des solutions d'imprégnation du support silice alumine, permettront de lever les 3 verrous énoncés précédemment. En effet l'emploi des sels de Nickel de ces hétéropolanions permettra d'éviter la présence d'ions ammonium reconnus pour être à l'origine de la limite de bonne dispersion des espèces, à haute teneur en métaux. L'emploi de ces sels déposés sur le support ainsi que les post-traitements effectués lors des étapes de préparation, permettront d'obtenir un meilleur contrôle de la dispersion des métaux à l'état oxyde et à l'état sulfure et donc, de la morphologie des feuillets de disulfures. D'autre part, l'utilisation d'hétéropolytungstates permet de favoriser l'interaction métal-promoteur en les plaçant dans la même entité moléculaire, ce qui permettra de contrôler le taux de promotion du catalyseur sulfuré et ainsi augmenter le nombre de sites actifs.

Des unités polycondensées renfermant Nickel et tunsgtène sont connues : citons $[PNiW_{11}(H_2O)O_{39}]^{n-}$ (Santos I.C.M.S et al. Association of Keggin-type anions with cationic meso-substituted porphyrins: synthesis, characterization and oxidative catalytic studies, Journal of Molecular Catalysis, Vol 231, 2005, pp 35-45) pour ses applications en catalyse d'oxydation en phase homogène ou encore $[SiNiW_{11}O_39]^{m-}$ (Niu J.Y., Wang Z.L, Wang J.P. Two one-dimensional monosubstituted heteropolytungstates based on Keggin anion units, Journal of Solid State Chemistry, Vol 177, n°10, (2004), 3411).

L'intérêt des hétéropolyanions a déjà été mentionné dans l'état de la technique. Par exemple le document US 2,547,380 mentionne l'utilisation bénéfique des sels d'hétéropolyacides de métaux de groupe VIII tels que les sels de cobalt ou de nickel de l'acide phosphomolybdique ou de l'acide silicomolybdique. Dans ce brevet, l'hétéropolyacide contient toujours du phosphore ou du silicium, ce dernier élément étant l'atome central de la structure. Ces composés ont l'inconvénient de conduire à des rapports atomiques (élément du groupe VIII/élément du groupe VI) limités. A titre d'exemple, le phosphomolybdate de cobalt, de formule a un rapport Co/Mo de 0,125.

La demande de brevet FR-A-2,749,778 décrit l'intérêt d'hétéropolyanions de formule générale $M_xAB_{12}O_4$, dans laquelle M est le cobalt ou le nickel, A est le phosphore, le silicium ou le bore et B est le molybdène ou le tungstène. x prend la valeur de 2 ou plus si A est le phosphore, de 2,5 ou plus si A est le silicium et de 3 ou plus si A est le bore. Ces structures ont l'intérêt par rapport aux structures divulguées dans le document US 2,547,380 d'atteindre des rapports atomiques (élément du groupe VIII / élément du groupe VI) supérieurs et ainsi conduire à des catalyseurs plus performants. Cette augmentation du rapport est obtenue grâce à la présence d'au moins une partie du molybdène ou du tungstène à une valence inférieure à sa valeur normale de six telle qu'elle résulte de la composition, par exemple, de l'acide phosphomolybdique, phosphotungstique, silicomolybdique ou silicotungstique.

La demande de brevet FR-A-2,764,211 décrit la synthèse et l'utilisation d'hétéropolyanions de formule $MxAB_{11}O_{40}M'C_{(z-2x)}$ dans laquelle M est le cobalt ou le nickel, A est le phosphore, le silicium ou le bore et B est le molybdène ou le tungstène, M' est le cobalt, le fer, le nickel, le cuivre ou le zinc, et C est un ion $H^+$ ou un cation alkylammonium, x prend la valeur de O à 4,5, z une valeur entre 7 et 9. Ainsi, cette formule correspond à celle revendiquée dans l'invention FR-A-2,749,778 mais dans laquelle un atome M' est substitué à un atome B. Cette dernière formule a pour intérêt de conduire à des rapports atomiques entre l'élément du groupe VIII et du groupe VI pouvant aller jusqu'à 0,5. Toutefois, même si le rapport (élément du groupe VIII)/(élément du groupe VI) est élevé dans ce cas, la méthode de préparation décrite dans le brevet FR-A-2,764,211 nécessite 2 voire 3 échanges et donc 2 voire 3 filtrations avec des rendements n'excédant pas 80% à chaque étape de filtration. Enfin, le fait qu'une partie des atomes M soient en substitution et non en contre-ion limite la solubilisation des composés de l'invention FR-A-2,764,211, comparativement à un hétéropolycomposé selon l'invention qui contiendrait le même nombre d'atomes B et M+M' mais dans lequel tous les atomes M seraient en contre-ions et entourés de 6 molécules d'eau en environnement octaédrique. Les composés décrits dans le brevet FR-A-2,764,211 sont donc moins solubles que les hétéropolycomposés selon l'invention à iso teneur en atomes B et en atomes M. Si les composés sont moins solubles, à iso support, il n'est pas possible de déposer autant de précurseurs en une seule imprégnation avec les composés du brevet FR-A-2,764,211 qu'avec les composés de la présente invention. L'activité hydrogénante étant directement liée à la quantité de phase active déposée,

Un avantage de la présente invention réside dans la synthèse de ces nouveaux hétéropolycomposés et dans l'originalité de leur mode d'obtention permettant d'obtenir ces composés à haut rapport Ni/W avec un rendement de plus de 80%.

**Description de l'invention**

La présente invention décrit un hétéropolycomposé constitué d'un sel de Nickel d'un hétéropolyanion de type Keggin lacunaire comprenant dans sa structure du tungstène de formule

$$Ni_{x+y/2}AW_{11-y}O_{39-5/2y}, zH_2O \quad (I)$$

dans laquelle Ni est le nickel,
A est choisi parmi le phosphore, le silicium et le bore,
W est le tungstène,
O est l'oxygène,
y = 0 ou 2
x = 3.5 si A est le phosphore,
x = 4 si A est le silicium
x = 4.5 si A est le bore
et x = m/2+2 pour la suite,
et z est un nombre compris entre 0 et 36 et m est égal 3 si A est le phosphore, m est égal 4 si A est le silicium et m est égal à 5 si A est le bore, dans lequel ledit hétéropolycomposé ne présente aucun atome de Nickel en substitution d'un atome de tungstène dans sa structure, lesdits atomes de Nickel étant placés en position de contre ion dans la structure dudit composé.

Conformément à l'invention, lesdits hétéropolycomposés ne présentent aucun atome de Nickel en substitution d'un atome de tunsgtène. Les atomes de Nickel sont systématiquement placés en position de contre-ion dans la structure et ceci, de manière avantageuse grâce au mode de préparation.

Selon un mode de réalisation préféré, l'hétéropolycomposé constitué d'un sel de Nickel d'un hétéropolyanion de type Keggin lacunaire comprenant dans sa structure du tungstène présente la formule suivante
$Ni_xAW_{11}O_{39}, zH2O$
dans laquelle Ni est le nickel,
A est un groupement choisi parmi le phosphore, le silicium et le bore,
W est le tungstène,
O est l'oxygène,

x est un nombre égal à 3,5 si le groupement A est le phosphore, égal à 4 si le groupement A est le silicium ou égal à 4,5 si le groupement A est le bore,

et z est un nombre compris entre 0 et 36, dans lequel ledit hétéropolycomposé ne présente aucun atome de Nickel en substitution d'un atome de tungstène dans sa structure, lesdits atomes de Nickel étant placés en position de contre ion dans la structure dudit composé.

De manière très préférée, ledit hétéropolycomposé est le composé de formule : $Ni_4SiW_{11}O_{39}$.

Selon un autre mode de réalisation préféré, l'hétéropolycomposé constitué d'un sel de Nickel d'un hétéropotyanion de type Keggin lacunaire comprenant dans sa structure du tungstène présente la formule suivante

$$Ni_{x+1}AW_9O_{34}, ZH_2O$$

dans laquelle Ni est le nickel,

A est un groupement choisi parmi le phosphore, le silicium et le bore,

W est le tungstène,

O est l'oxygène,

x est un nombre égal à 3,5 si le groupement A est le phosphore, égal à 4 si le groupement A est le silicium ou égal à 4,5 si le groupement A est le bore, et z est un nombre compris entre O et 36 dans lequel ledit hétéropolycomposé ne présente aucun atome de Nickel en substitution d'un atome de tungstène dans sa structure, lesdits atomes de Nickel étant placés en position de contre ion dans la structure dudit composé.

De manière très préférée, ledit hétéropolycomposé est le composé de formule $Ni_5SW_9O_{34}$

Lesdits hétéropolycomposés selon l'invention sont avantageusement solubles en milieu aqueux. Ils sont avantageusement isolés et analysés.

Les hétéropolycomposés de formule (I) peuvent avantageusement être analysés sous foré solide ou en solution. Les analyses par RMN du $^{31}P$ (résonance magnétique nucléaire du P), par RMN du $^{29}Si$ (résonance magnétique nucléaire du Si), et par RMN du $^{11}B$ (résonance magnétique nucléaire du B) des hétéropolycomposés de formule (I) ne révèlent aucune transition entre 300 et 600 ppm. Une transition à un tel déplacement chimique serait le signe que le Nickel, paramagnétique, serait entré dans la structure en substitution d'un atome de tungstène, ce qui n'est pas le cas des hétéropolycomposés selon l'invention.

L'emploi de solutions aqueuses desdits hétéropolycomposés pour imprégner des supports poreux acides, et de préférence une matrice minérale poreuse acide, et de manière préférée des matrices de type aluminosilicates ou de type zéolitique dilué dans l'alumine a avantageusement conduit à des catalyseurs d'hydrocraquage présentant une activité hydrogénante accrue.

La présente invention a donc également pour objet un catalyseur comprenant ledit hétéropolycomposé et éventuellement au moins une matrice minérale poreuse acide.

L'une des caractéristiques essentielles des catalyseurs visés par la présente invention est la présence, au moins en partie, desdits éléments nickel et tungstène sous la forme d'un hétéropolycomposé selon l'invention.

Selon un mode de réalisation préféré, le catalyseur se présente sous forme massique. Dans ce cas, il renferme avantageusement, à l'état séché, en % poids par rapport à la masse totale du catalyseur, de 0,01 à 100 %, de préférence de 0,05 à 100% et de manière encore plus préférée de 0,1 à 100 % d'au moins ledit hétéropolycomposé selon l'invention incluant au moins du nickel et au moins du tungstène et présentant une structure de (I) décrite ci-dessus.

Selon un deuxième mode de réalisation préféré, ledit catalyseur est un catalyseur supporté, le support étant formé d'au moins une matrice minérale poreuse acide, de préférence amorphe ou mal cristallisée, choisie parmi, les silices alumines, les aluminosilicates cristallisés ou non, mésostructurés ou non, les alumines dopées (B, F, P), parmi le groupe formé par la famille des tamis moléculaires cristallisés non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt)

La matrice minérale poreuse acide peut également avantageusement renfermer, en plus d'au moins un des composés cités ci-dessus, au moins une argile simple synthétique ou naturelle de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. On peut aussi avantageusement utiliser des mélanges silice alumine et d'argile.

La matrice peut également avantageusement renfermer, en plus d'au moins un des composés cités ci-dessus, au moins un composé choisi dans le groupe formé par la famille des tamis moléculaires de type aluminosilicate cristallisé, zéolithes synthétiques et naturelles telles que la zéolithe Y, la zéolithe Y fluorée, la zéolithe Y contenant des terres rares, la zéolithe 10 X, la zéolithe L, la mordénite à petits pores, la mordénite à grands pores, les zéolithes oméga, NU-10, ZSM-5, ZSM-48, ZSM-22, ZSM-23, ZBM-30, EU-1, EU-2, EU-11, Bêta, zéolithe A, NU-87, NU-88, NU-86, NU-85, IM-5, IM-12, IZM-2 et Ferriérite.

Parmi les zéolithes on préfère habituellement employer des zéolithes dont le rapport atome de charpente silicium/aluminium (Si/Al) est supérieur à environ 3 :1.

On emploie avantageusement des zéolithes de structure faujasite et en particulier les zéolithes Y stabilisées et ultrastabilisées (USY) soit sous forme au moins partiellement échangées avec des cations métalliques, par exemple des cations des métaux alcalino-terreux et/ou des cations de métaux de terres rares de numéro atomique 57 à 71 inclus, soit sous forme hydrogène (Zéolite Molecular Sieves Structure, Chemistry and Uses, D.W. BRECK, J.WILLEY and sons 1973).

De préférence, le catalyseur supporté comporte 0,01 % à 25 % poids par rapport à la masse totale du catalyseur de NiO, de préférence 0,1 à 10 % poids de NiO et 4,99 % à 50 % poids par rapport à la masse totale du catalyseur de $WO_3$, de préférence 9,99% à 40 % poids de $WO_3$ et 25 à 95 % poids d'au moins une matrice minérale poreuse acide et de préférence 50 % à 90 % poids de ladite matrice.

Lesdits catalyseurs sont avantageusement analysés par spectroscopie IR, RMN, et Raman et par analyse élémentaire par fluorescence X.

## Techniques de caractérisation

Les caractéristiques essentielles des structures de formule (I) de l'hétéropolycomposé, à savoir la position en contre ion des atomes de Nickel dans ledit hétéropolycomposé et le degré de condensation, c'est-à-dire la quantité d'octaèdres de W dans ledit hétéropolycomposé des octaèdres de tungstène dans la structure peuvent être déterminées par RMN $^{31}$P, $^{29}$Si, $^{11}$B et par spectroscopie Raman et par Fluorescence X (FX).

La Résonance Magnétique Nucléaire (RMN) est une technique de spectroscopie destinée à l'analyse structurale de molécules contenant des noyaux à spin non nul. La fréquence de résonance du noyau cible va être directement affectée par son environnement chimique, c'est pourquoi à partir d'un spectre, il est possible de remonter à la structure ou par défaut d'obtenir une information partielle sur la structure. Les noyaux les plus couramment étudiés sont $^1$H, $^{13}$C, $^{14}$N mais l'analyse RMN peut également être appliquée de aux noyaux $^{31}$P, $^{29}$Si, $^{11}$B ou encore $^{183}$W.

La spectroscopie Raman est une technique d'analyse non destructive qui permet de déterminer des structures moléculaires, d'étudier des systèmes amorphes ou cristallins et qui est particulièrement sensible aux petites structures et donc parfaitement adaptée pour la caractérisation des hétéropolyanions.

La répartition et la localisation des éléments constituant la phase hydrogénante peuvent être déterminées par des techniques telles que la microsonde de Castaing (profil de répartition des divers éléments), la Microscopie Électronique à Transmission couplée à une analyse X des composants du catalyseurs (EDX), ou bien encore par l'établissement d'une cartographie de répartition des éléments présents dans le catalyseur par microsonde électronique. Ces techniques permettent de mettre en évidence la présence de ces éléments exogènes ajoutés après la synthèse du matériau amorphe à porosité hiérarchisée et organisée comprenant du silicium constitutif du catalyseur selon l'invention. La répartition et la localisation du tungstène, du nickel et du groupe constitué par les éléments P, B et Si peuvent être déterminées selon ces techniques.

La composition globale du catalyseur selon l'invention peut être déterminée par Fluorescence X (FX) sur le catalyseur à l'état pulvérulent ou par Absorption Atomique (AA) après attaque acide du catalyseur.

Un autre objet de l'invention concerne un procédé de préparation dudit hétéropolycomposé constitué d'un sel de Nickel d'hétéropolyanions de type keggin lacunaire comprenant dans sa structure du tungstène comprenant les étapes suivantes :

1) synthèse de l'hétéropolyanion de keggin contenant du tungstène de formule :

$$Ba_{x+y/2} AW_{11-y}O_{39-5/2y}, zH_2O \quad (I')$$

dans lesquelles Ba est le baryum, A est choisi parmi le phosphore, le silicium et le bore, W est le tungstène, O est l'oxygène, y = 0 ou 2, x est un nombre égale à 3,5 si A est le phosphore, à 4 si A est le silicium ou à 4,5 si A est le bore et x = m/2+2 dans la suite et z est un nombre compris entre 0 et 36, par réaction des acides hétéropolytungstites $H_mAW_{12}O_{40}$ dans lesquels A est choisi parmi le phosphore, le silicium et le bore, H est l'hydrogène, W est le tungstène, O est l'oxygène et m est égal 3 si A est le phosphore, m est égal 4 si A est le silicium et m est égal à 5 si A est le bore, auxquels sont ajoutés x + y/2 équivalents d'hydroxyde de baryum $(Ba(OH)_2)$ pour former les composés de formule $Ba_{x+y/2}AW_{11-y}O_{39-5/2y}, zH_2O$ (I') selon l'équation suivante :

$$H_mAW_{12}O_{40} + ((m/2 + 2) + y/2) \, Ba(OH)_2 \rightarrow Ba_{(m/2+2+y/2)}AW_{11-y}O_{39-5/2y} + (y+1) \, HWO_4^- +$$

$$(y+1) \, H^+ + (m+1-y/2) \, H_2O$$

2) formation du sel de Nickel de l'hétéropolyanion de keggin contenant du tungstène de formule $Ni_{x+y/2}AW_{11-y}O_{39-5/2y}$, $zH_2O$ (I) à partir de l'hétéropolyanion de keggin contenant du tungstène issu de l'étape 1) par substitution des cations $Ba^{2+}$ par des cations $Ni^{2+}$ par échange ionique sur des résines échangeuses de cations, lesdites résines échangeuses de cations étant préalablement échangées aux cations $Ni^{2+}$.

Selon un mode de réalisation préféré du procédé de préparation, l'hétéropolyanion de keggin contenant du tungstène préparé selon l'étape 1) est l'hétéropolyanion de formule : $Ba_xAW_{11}O_{39}$, $zH_2O$ et le sel de Nickel de l'hétéropolyanion de keggin contenant du tungstène est le composé de forrnule : $Ni_xAW_{11}O_{39}$, $zH_2O$.

Selon un mode de réalisation préféré du procédé de préparation, l'hétéropolyanion de keggin contenant du tungstène préparé selon l'étape 1) est l'hétéropolyanion de formule : $Ba_{x+1}AW_9O_{34}$, $zH_2O$ et le sel de Nickel de l'hétéropolyanion de keggin contenant du tungstène est le composé de formule : $Ni_{x+1}AW_9O_{34}$, $zH_2O$.

Selon l'étape 1) du procédé de préparation dudit hétéropolycomposé selon l'invention, les acides hétéropolytungstites $H_mAW_{12}O_{40}$ définis ci dessus se solubilisent avantageusement instantanément au contact de l'eau. L'introduction de l'hydroxyde de baryum, composé basique, rend avantageusement la solution moins acide et les octaèdres de tungstène des acides hétéropolytungstites initiaux se décondensent pour former les composés $AW_{11}O_{39}^{2x-}$ ou $AW_9O_{34}^{2(x+1)-}$ dans lesquels respectivement A est le phosphore lorsque l'acide hétéropolytungstite initial est $H_3PW_{12}O_{40}$, dans lequel A est le silicium lorsque l'acide hétéropolytungstite initial est $H_4SiW_{12}O_{40}$ et dans lequel A est le bore lorsque l'acide hétéropolytungstite initial est $H_5BW_{12}O_{40}$. Les structures hétéropolyanionques s'entourent alors avantageusement des ions $Ba^{2+}$ pour compenser la charge négative. Les composés de formule (I') précipitent avantageusement instantanément ou pas suivant la concentration de la solution. La solution est alors avantageusement filtrée et les composés de formule (I') sont avantageusement isolés.

Selon l'étape 2) du procédé de préparation dudit hétéropolydomposé selon l'invention, il s'agit de substituer tous les cations $Ba^{2+}$ par des cations $Ni^{2+}$ de façon à obtenir le composé de formule (I) à partir du composé (I'). Les composés de formule (I') sont avantageusement remis en solution à la concentration souhaitée. L'échange d'ions selon la 2ème étape est un procédé grâce auquel les ions $Ba^{2+}$ en position de contre ion dans les composée de formule (I') et (II') en solution sont avantageusement éliminés de ladite solution par adsorption sur la résine échangeuse d'ions pour être remplacés par une quantité équivalente d'autres ions de même charge émis par ladite résine, ici les cations $Ni^{2+}$. Les ions de charges opposées, ici les anions de formule $AW_{11}O_{39}^{2x-}$ ou $AW_9O_{34}^{2(x+1)-}$ (où A est le phosphore, le silicium ou le bore) ne sont pas affectés et lesdites structures anioniques de type keggin lacunaire restent intégralement conservées.

Pour accélérer les échanges, la résine échangeuse d'ions est avantageusement finement divisée, afin de présenter la surface maximum de contact avec la solution ; c'est donc sous forme de grains très fins que les résines échangeuses d'ions sont utilisées.

De manière préférée, les résines échangeuses de cations utilisées sont les résines échangeuses de cations acides dont les groupements fonctionnels sont avantageusement des anions de type sulfonate $-SO_3^-$, carboxylate $-CO_2^-$, aminodiacétate $-N(CH_2CO_2^-)_2$, phophonate $-PO_3^{2-}$, ou phosphinate $>PO_2^-$, etc.... De manière préférée, les résines échangeuses de cations sulfoniques fortement acides sont utilisées. Les résines se présentent alors avantageusement dans ce cas sous la forme d'un sulfonate de polystyrène réticulé par du divinybenzène. Ces résines sont avantageusement choisies pour leur différence d'affinités entre les différents cations qui suit cet ordre : $H^+ < Na^+ < Ni^{2+} < Ba^{2+}$. De manière générale, il a été remarqué que lorsqu'on veut accroître la différence d'affinité entre plusieurs ions, pour un même type de résines, il est nécessaire d'augmenter la réticulation de la résine.

Conformément à l'étape 2) dudit procédé de préparation, lesdites résines échangeuses de cations sont préalablement échangées aux cations $Ni^{2+}$. En effet, il est nécessaire d'échanger la résine commerciale généralement fournie sous forme protonée ($H^+$) ou sous forme $Na^+$ par des ions $Ni^{2+}$ introduits à l'aide d'une solution saline concentré. De manière générale, l'affinité pour un cation augmente naturellement avec la charge de celui-ci et la résine présente donc les ordres d'affinité suivants : $H^+ < Ni^{2+}$ et $Na^+ < Ni^{2+}$. L'échange précité est donc aisé. L'étape 2 (échange des ions $Ba^{2+}$ des composés de formule (I') et (II')) n'est véritablement opérée que lorsque la résine est complètement échangée par des ions $Ni^{2+}$.

La première réaction d'échange, qui va préparer la résine pour la réaction de l'étape 2 s'écrit avantageusement :

$$2R^-Na^+ + Ni^{2+} \leftrightarrow (R^-)_2Ni^{2+} + 2\,Na^+$$

dans laquelle $R^-$ représente par exemple un site sulfonate $SO_3^-$

La réaction d'échange qui est réalisée au cours de la 2ème étape s'écrit donc avantageusement :

$$(R')_2Ni^{2+} + Ba^{2+} \leftrightarrow (R^-)_2Ba^{2+} + Ni^{2+}$$

Où $R^-$ représente par exemple un site suffonate $SO_3$

La solution en sortie de la résine échangeuse d'ions peut ensuite être avantageusement utilisée pour imprégner directement au moins un support formé d'au moins une matrice minérale poreuse acide ou peut éventuellement subir de manière préférée une évaporation pour concentrer la solution.

Les catalyseurs supportés selon l'invention peuvent ensuite être préparés par toute méthode connue de l'homme du métier dès lors que les caractéristiques essentielles sur la position du nickel et le degré de condensation des octaèdres de tungstène dans le catalyseur à l'état séché sont obtenues.

Conformément à l'invention, les catalyseurs supportés selon la présente invention se préparent en deux étapes. La première étape consiste à préparer le sel correspondant à l'hétéropolyanion visé à la formule (I) selon le procédé de préparation dudit hétéropolycomposé constitué d'un sel de Nickel d'hétéropolyanions de type keggin lacunaire comprenant dans sa structure du tungstène défini ci dessus et la seconde étape consiste en l'imprégnation sur le support.

L'introduction de l'héteropolyanion sur le support pour obtenir un catalyseur supporté peut donc avantageusement se faire de façon classique par toute technique connue de l'homme du métier avant, pendant ou après la mise en forme du support. De préférence, l'introduction de l'hétéropolyanion sur un support mis en forme par la technique bien connue de l'imprégnation à sec dans laquelle a) le support, par exemple un aluminosilicate commercial, est avantageusement imprégné par une solution aqueuse contenant la quantité voulue d'hétéropolyanions et éventuellement du molybdène et/ou du tungstène introduit sous une autre forme et éventuellement un autre élément du groupe VIII introduit sous une autre forme, b) le solide humide est avantageusement laissé reposer sous une atmosphère humide à une température comprise entre 10 et 80°C, c) le solide obtenu à l'étape b) est avantageusement séché à pression réduite ou pas à une température comprise entre 50 et 300°C et d) le solide obtenu à l'étape c) est calciné à une température comprise entre 300 et 1000°C et plus précisément entre 300 et 550°C pendant une durée de 1 à 24 heures et de façon préférée pendant une durée de 2 à 6 heures, sous atmosphère oxydante (par exemple air ou oxygène), neutre (par exemple azote ou argon) ou réductrice (par exemple hydrogène).

Afin d'augmenter la teneur en nickel et en tungstène sur le catalyseur final, il est possible de réaliser des imprégnations multiples. Dans ce cas de figure, le catalyseur préalablement imprégné pour la première fois est alors avantageusement séché dans les mêmes conditions que décrites précédemment et éventuellement calciné dans les mêmes conditions que décrites précédemment. Il est alors avantageusement imprégné une seconde fois avec une solution aqueuse contenant les hétéropolyanions de formule (I) une seconde fois. Les imprégnations multiples peuvent être répétées autant de fois que nécessaire.

Les catalyseurs selon l'invention peuvent avantageusement être fabriqués et employés sous la forme de poudre, de poudre compactée concassée tamisée, de pastilles, de granulés, de tablettes, d'anneaux, de billes, de roues, de sphères ou d'extrudés, de préférence sous la forme de poudre compactée concassée tamisée, de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

La présente invention a également pour objet l'utilisation dudit catalyseur comprenant ledit hétéropolycomposé dans un procédé d'hydrocraquage, d'hydroconversion et/ou d'hydrotraitement.

Les catalyseurs utilisés dans le domaine de l'Hydrocraquage sont des catalyseurs bifonctionnels alliant une fonction acide (apportée par le support) et une fonction hydro-déshydrogénante (apportée par des sulfures métalliques). La fonction acide participe aux réactions d'isomérisation et de craquage alors que la fonction hydro-déshydrogénante va participer aux réactions d'hydrotraitement a proprement parlé c'est-à-dire l'HDN, l'HDS, et l'HDA (hydrodéaromatisation).

Toute réaction en hydrocraquage commence par une étape mettant en jeu une réaction d'hydrogénation ou une réaction de déshydrogénation faisant participer un site métallique hydro-déshydrogénant.

La première étape de craquage d'une paraffine commence ainsi par la génération d'une oléfine à partir dune paraffine via une réaction de déshydrogénation.

La première étape de craquage d'un noyau aromatique commence par l'hydrogénation du cycle aromatique car un noyau benzénique est plus difficilement craquable que ce même noyau hydrogéné.

L'hydrocraquage de distillats sous vide (DSV) est un procédé clé conduisant sélectivement à des distillats moyens (gasoil et kérosène) d'excellente qualité. C'est le choix de la balance entre la force et nombre des sites acides et la qualité de la fonction hydrogénante qui va déterminer la sélectivité du catalyseur. Ainsi, une fonction craquante faible avec une fonction hydrogénante forte va permettre d'éviter les craquages successifs et va permettre d'être plus sélectifs en Distillats Moyens. Comparativement, une fonction craquante forte avec une fonction hydrogénante faible va favoriser les craquages successifs et la génération de coupes légères voire de gaz.

Enfin, la qualité des coupes Distillats Moyens dépend fortement de la fonction hydro-déshydrogénante et de son aptitude à hydrogéner les cycles aromatiques et à augmenter le rapport H/C. Le point de fumée des kérosènes (PF>25mm) est notamment conditionnée par une teneur limite en aromatiques n'excédant pas 20%. L'indice de cétane du gazole (IC $\geq$ 51) est également conditionné par une faible teneur en aromatiques, sans quoi la spécification ne sera pas atteinte.

C'est pour toutes ces raisons que lors de la conception d'un catalyseur d'hydrocraquage, l'homme de l'Art cherche à générer la fonction hydro-déshydrogénante la plus forte possible.

*Procédés de traitement de charges hydrocarbonées selon l'invention*

Les catalyseurs selon l'invention sont avantageusement utilisés pour le traitement des coupes hydrocarbonées, généralement en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène / litre d'hydrocarbure soit compris entre 80 et 5000 l/l.

Les catalyseurs selon l'invention sont utilisés avantageusement pour l'hydrocraquage et/ou l'hydroconversion de coupes hydrocarbonées.

Les catalyseurs selon l'invention peuvent être utilisés pour l'hydrotraitement de charges hydrocarbonées, seuls ou en amont d'un procédé d'hydrocraquage/hydroconversion.

Sulfuration des catalyseurs

Préalablement à l'injection de la charge, les catalyseurs selon l'invention, soit à l'état séché soit à l'état calciné, sont de préférence soumis à un traitement de sulfuration de manière à obtenir des catalyseurs de type sulfures, le traitement de sulfuration permettant de transformer, au moins en partie, les espèces métalliques en sulfures avant leur mise en contact avec la charge à traiter Ce traitement d'activation par sulfuration est bien connu de l'Homme du métier et peut être effectué par toute méthode déjà décrite dans la littérature soit in-situ, c'est-à-dire dans le réacteur, soit ex-situ. La source de soufre peut avantageusement être le soufre élémentaire, le sulfure de carbone, l'hydrogène sutfuré, les hydrocarbure soufrés tels que le diméthylsulfure, le diméthyldisulfure, les mercaptans, les composés du thiophène, les thiols, les polysulfures tels que par exemple le ditertiononylpolysulfure ou TPS-37 de la société ATOFINA, les coupes pétrolières riches en soufre telles que l'essence, le kérosène, le gazole, seuls ou en mélanges avec un des composés soufrés cités ci-dessus. La source de soufre préférée est l'hydrogène sulfuré ou les hydrocarbures soufrés tels que le diméthyldisulfure. Une méthode de sulfuration classique bien connue de l'homme du métier consiste à chauffer en présence d'hydrogène sulfuré (pur ou par exemple sous flux d'un mélange hydrogénelhydrogène sulfuré) à une température comprise entre 150 et 800°C, de préférence entre 250 et 600°C, généralement dans une zone réactionnelle à lit traversé.

Charges

Des charges très variées peuvent avantageusement être traitées par les procédés selon l'invention décrits ci-dessus et généralement elles contiennent au moins 20% volume et souvent au moins 80% volume de composés bouillant au-dessus de 340°C.

La charge peut avantageusement être des LCO (Light Cycle Oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désuffuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, la charge peut avantageusement être constituée de paraffines issues du procédé Fischer-Tropsch, ou encore constituée d'huiles végétales, ou encore tout mélange des charges précédemment citées. La liste ci-dessus n'est pas limitative. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm, de préférence comprise entre 500 et 10000 ppm poids, de manière plus préférée entre 700 et 4000 ppm poids et de manière encore plus préférée entre 1000 et 4000 ppm. La teneur en soufre des charges traitées dans les procédés selon l'invention est usuellement comprise entre 0,01 et 5% poids, de manière préférée comprise entre 0,2 et 4% et de manière encore plus préférée entre 0,5 et 3 %.

La charge peut éventuellement avantageusement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm, de manière préférée inférieure à 1000 ppm, de manière encore plus préférée inférieure à 200 ppm.

Lits de garde :

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement.

Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous...

Ces catalyseurs peuvent avoir été imprégnées par une phase active ou non. De manière préférée, les catalyseurs sont imprégnés par une phase hydro-déshydrogénante. De manière très préférée, la phase CoMo ou NiMo est utilisée.

Ces catalyseurs peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits dé garde préférés selon l'invention sont les HMC et l'ACT961.

Conditions opératoires

Les conditions opératoires telles que température, pression, taux de recyclage d'hydrogène, vitesse spatiale horaire, peuvent être très variables en fonction de la nature de la charge, de la qualité des produits désirés et des installations dont dispose le raffineur. Le catalyseur d'hydrocraquage/hydroconversion ou hydrotraitement est avantageusement généralement mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20h$^{-1}$ et de préférence 0,1-5h$^{-1}$, de préférence, 0,2-3h$^{-1}$, et la quantité d'hydrogène introduite est telle que le rapport volumique litre d'hydrogène / litre d'hydrocarbure soit compris entre 80 et 5000l/l et le plus souvent entre 100 et 2000 l/l.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15% et de manière encore plus préférée comprises entre 20 et 95%.

Modes de réalisation

Les procédés d'hydrocraquage et/ou hydroconversion mettant en oeuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur de la présente invention peut avantageusement être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Le catalyseur de la présente invention peut avantageusement être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.

Le lit bouillonnant s'opère avec retrait de catalyseur usé et ajout journalier de catalyseur neuf afin de conserver une activité du catalyseur stable.

Dans un schéma d'hydrocraquage dit en deux étapes avec séparation intermédiaire entre les deux zones réactionnelles, dans une étape donnée, le catalyseur de la présente invention peut-être utilisé dans l'un ou dans les deux réacteurs en association ou non avec un catalyseur d'hydroraffinage situé en amont du catalyseur de la présente invention.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Procédé dit en une étape en lit fixe

Pour les catalyseurs à faible teneur en silice, les teneurs pondérales en silice du support entrant dans la composition du catalyseur sont comprises entre 5 et 30% et de préférence entre 5 et 20%.
Pour les catalyseurs à forte teneur en silice, les teneurs pondérales en silice du support entrant dans la composition du catalyseur sent comprises entre 20 et 80% et de préférence entre 30 et 60%.
Dans le cas où le catalyseur selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur de la présente invention.
Lorsque le catalyseur selon la présente invention est avantageusement utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50% poids et de manière préférée inférieure à 40%.
Le catalyseur selon l'invention peut avantageusement être utilisé en amont ou en aval du catalyseur zéolithique. En aval du catalyseur zéolithique, il permet de craquer les hydrocarbures polyaromatiques tels que décrits notamment dans l'ouvrage "Hydrocracking, Science and Technology" de J.Scherzer, Editions M.Dekker Incorporated, 1996.

Procédé dit en une étape en lit bouillonnant

Le catalyseur selon l'invention peut avantageusement être utilisé seul dans un ou plusieurs réacteurs.
Dans le cadre d'un tel procédé, on pourra utiliser avantageusement plusieurs réacteurs en série, le ou les réacteurs en lit bouillonnant contenant le catalyseur selon l'invention étant précédé d'un ou plusieurs réacteurs contenant au moins un catalyseur d'hydroraffinage en lit fixe ou en lit bouillonnant.
Lorsque le catalyseur selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

Procédé dit en une étape en lit fixe avec séparation intermédiaire

Le catalyseur selon la présente invention peut aussi être utilisé dans un procédé d'hydrocraquage dit en une étape comportant une zone d'hydroraffinage, une zone permettant l'élimination partielle de l'ammoniac, par exemple par un flash chaud, et une zone comportant un catalyseur d'hydrocraquage. Ce procédé d'hydrocraquage de charges hydrocarbonées en une étape pour la production de distillats moyens et éventuellement de bases huiles comporte au moins une première zone réactionnelle incluant un hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniac de l'effluent sortant de la première zone. Cette séparation est avantageusement effectuée au moyen d'un flash chaud intermédiaire. L'hydrocraquage opéré en deuxième zone réactionnelle est réalisé en présence d'ammoniac en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur de la présente invention est utilisé de préférence dans la zone réactionnelle d'hydrocraquage en association ou non avec un catalyseur d'hydroraffinage situé en amont du catalyseur de la présente invention. Le catalyseur selon l'invention peut être utilisé en amont ou en aval du catalyseur zéolithique. En aval du catalyseur zéolithique, il permet notamment de convertir les hydrocarbures polyaromatiques ou les précurseurs de hydrocarbures polyaromatiques.

Le catalyseur selon l'invention peut avantageusement être utilisé soit dans la première zone réactionnelle en prétraitement convertissant, seul ou en association avec un catalyseur d'hydroraffinage classique, situé en amont du catalyseur selon l'invention, dans un ou plusieurs lits catalytiques, dans un ou plusieurs réacteurs.

Procédé d'hydrocraquage dit en une étape avec hydroraffinage préliminaire sur catalyseur d'acidité faible.

Le catalyseur selon l'invention peut avantageusement être utilisé dans un procédé d'hydrocraquage comprenant:

- une première zone réactionnelle d'hydroraffinage dans laquelle la charge est mise en contact avec au moins un catalyseur d'hydroraffinage présentant dans le test standard d'activité un taux de conversion du cyclohexane inférieur à 10 % massique.
- une deuxième zone réactionnelle d'hydrocraquage dans laquelle une partie au moins de l'effluent issu de l'étape d'hydroraffinage est mise en contact avec au moins un catalyseur d'hydrocraquage zéolithique présentant dans le test standard d'activité un taux de conversion du cyclohexane supérieur à 10 % massique, le catalyseur selon l'invention étant présent dans au moins une des deux zones réactionnelles.

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à bas d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillat moyen (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

La même configuration de lits catalytiques en lit fixe ou en lit bouillonnant peut être utilisée dans la première étape d'un schéma dit en deux étapes, que le catalyseur soit utilisé seul ou en association avec un catalyseur d'hydroraffinage classique. Le catalyseur selon l'invention peut être utilisé en amont ou en aval du catalyseur zéolitique. En aval du catalyseur zéolithique, il permet notamment de convertir les hydrocarbures polyaromatiques ou les précurseurs de hydrocarbures polyaromatiques.

6) Exemples

Les exemples suivants illustrent l'invention sans en limiter la portée.

### Exemple 1: Catalyseur NiSiW supporté de rapport Ni/W = 0,36 atomes environ et Si/W = 0,09 atomes (comparatif).

Le molybdène et le cobalt sont co-imprégnés à sec en milieu aqueux sur un support de type silice alumine commerciale synthétisée par voie cogel (380 m$^2$/g). Le sel précurseur du tungstène est le métatungstate d'ammonium $(NH_4)_6H_2W_{12}O_{40}$, $4H_2O$, le sel précurseur du nickel est le nitrate de nickel $Ni(NO_3)_2$, $6H_2O$. Le précurseur de silicium est apporté sous forme de rhodorsil. La quantité de nickel est ajustée de façon à respecter le rapport molaire Ni/W=0,36 atomes /atomes et la quantité de silicium est ajustée de façon à respecter le rapport molaire Si/W=0,09 atomes /atomes, les siliciums issus du support ne sont, bien-sûr, pas pris en compte dans ce calcul. Après une maturation de 12 heures, les extrudés sont séchés à 120°C une nuit, puis calcinés sous air à 450°C pendant 2 heures. Sur ce catalyseur non sulfuré NiW / SiAl, la teneur en oxyde de tungstène est de 16,8 % et la teneur en oxyde de nickel est de 2,1 %, ce qui correspond à un rapport Ni/W réel de 0,39 atomes/atomes. Ce catalyseur A est non conforme à l'invention.

### Exemple 2: Catalyseur NiWP supporté de rapport Ni/W = 0,32 atomes environ et P/W = 0,09 atomes (comparatif).

Le molybdène et le cobalt sont co-imprégnés à sec en milieu aqueux sur un support de type silice alumine commerciale synthétisée par voie cogel (380 m2/g). Le sel précurseur du tungstène est le métatungstate d'ammonium $(NH_4)_6H_2W_{12}O_{40}$; $4H_2O$, le sel précurseur du nickel est le nitrate de nickel $Ni(NO_3)_2$, $6H_2O$, le précurseur de P est le $H_3PO_4$. La quantité de nickel est ajustée de façon à respecter le rapport molaire Ni/W=0,32 atomes /atomes et la quantité de $H_3PO_4$ est ajoutée de façon à respecter le rapport molaire P/W = 0,09 atomes /atomes. Après une maturation de 12 heures, les extrudés sont séchés à 120°C une nuit, puis calcinés sous air à 450°C pendant 2 heures. Sur ce catalyseur non sulfuré NiWP / SiAl, la teneur en oxyde de tungstène est de 16,7 %, la teneur en oxyde de nickel est de 1,7 % et la teneur en $P_2O_5$ est de 0,5 %, ce qui correspond à un rapport Ni/W réel de 0,32 atomes/atomes et à un rapport P/W de 0,1. Ce catalyseur B est représentatif d'un catalyseur industriel et est non conforme à l'invention.

### Exemple 3 : Catalyseur NiSiW supporté de rapport Ni/W = 0,36 atomes environ et Si/W = 0,09 atomes (conforme).

A une solution d'acide silicotungstique à 0,1 mol/L (58,76 g de $H_4SiW_{12}O_{40}$ (introduit sous forme de 63,86 g de $H_4SiW_{12}O_{40}$,$13H_2O$) dans 200 ml d'eau, pH=0,6), on ajoute 4 équivalents d'hydroxyde de baryum (13,98 g de Ba $(OH)_2$ (introduit sous forme de 25,75 g de $Ba(OH)_2$, $BH_2O$, pH = 6,25). Le sel de baryum de l'hétéropolyanion précipite. Il est recueilli et séché sur fritté sous courant d'air. La masse de produit $Ba_4SiW_{11}O_{39}$ obtenue est de 55,92 g, soit un rendement de 85%. Les 55,92 g de produit $Ba_4SiW_{11}O_{39}$ sont remis en solution dans 170 ml d'eau désionisée. La solution est chauffée légèrement à 45°C pour solubiliser le sel de baryum de l'hétéropolyanion. La concentration du sel solubilisé est de 0,1 mol. $L^{-1}$.
La solution ainsi préparée passe alors sur une résine échangeuse de cations. L'ajout de la solution se fait goutte à goutte. Cette résine est une résine commerciale fortement acide et de distribution granulométrique uniforme autour de 585 $\mu$m : Dowex Marathon C. Le squelette est formé d'un gel de styrène réticulé par du DVB. Les groupes fonctionnels sont des sulfonates $SO_3^-$. Elle est reçue conditionnée sous forme $Na^+$. Préalablement à l'échange des $Ba^{2+}$ par des $Ni^{2+}$, la résine est conditionnée sous forme $Ni^{2+}$ à l'aide d'une solution saturée en $NiSO_4$. Une fois la résine conditionnée sous forme $Ni^{2+}$, on place 92 mL de résine dans une colonne en inox de 10 mm de rayon interne. La hauteur de lit est alors de 450 mm. Cette colonne est placée dans une étuve chauffée à 45°C pour permettre la solubilisation des sels pendant l'étape d'échange. Les 170 ml de solution chauffée à 45°C passent sur la colonne. Une fois que les 49 premiers millitres de solution correspondant au volume mort sont passés, on récupère 160 ml de solution contenant le $Ni_4SiW_{11}O_{39}$ à une concentration de 0,1 mol. $L^{-1}$. L'espèce $Ba_4SiW_{11}O_{39}$ n'y est présente qu'à l'échelle de trace. La solution est alors partiellement évaporée et concentrée. La concentration finale en $N_4SiW_{11}O_{39}$ dans la solution est de 0,16 mol. $L^{-1}$. Ces 100 mL de solution ainsi obtenus sont alors imprégnés sur un support commercial de type silice alumine synthétisée par voie cogel (380 m2/g). Après une maturation de 12 heures, les extrudés sont séchés à 120°C une nuit, puis calcinés sous air à 450°C pendant 2 heures.
Sur ce catalyseur non sulfuré NiW / SiAl, la teneur en oxyde de tungstène est de 17,1 % et la teneur en oxyde de nickel est de 1,9 %, ce qui correspond à un rapport Ni/W réel de 0,36 atomes/atomes. Ce catalyseur T1 est conforme à l'invention.

### Exemple 4 : Catalyseur NiPW supporté de rapport Ni/W = 0,32 atomes environ et P/W = 0,09 atomes (conforme).

A une solution à 0,1 mol/L d'acide phosphotungstique (52,7 g de $H_3PW_{12}O_{40}$ (introduit sous forme 56,9 g de $H_3PW_{12}O_{40}$, $13H_2O$) dans 180 ml eau, pH = 0,5), on ajoute 3,5 équivalents de d'hydroxyde de baryum (12,52 g de Ba $(OH)_2$ (introduit sous forme de 23,06 g de $Ba(OH)_2$; $8H_2O$), pH = 4,96). Le sel de baryum de l'hétéropolyanion précipite. Il est recueilli et séché sur fritté sous courant d'air. La masse de produit $Ba_{7/2}PW_{11}O_{39}$ obtenue est de 50,4 g, soit un rendement de 88%. Les 50,4 g de produit $Ba_{7/2}PW_{11}O_{39}$ sont remis en solution dans 160 ml d'eau désionisée et on chauffe légèrement à 45°C pour solubiliser le sel de baryum de l'hétéropolyanion. La concentration du sel solubilisé est alors de 0,1 mol. L$^{-1}$.

La solution ainsi préparée passe alors sur une résine échangeuse de cations. L'ajout de la solution se fait goutte à goutte. Cette résine est une résine commerciale fortement acide et de distribution granulométrique uniforme autour de 585 $\mu$m : Dowex Marathon C. Le squelette est formé d'un gel de styrène réticulé par du DVB. Les groupes fonctionnels sont des sulfonates $SO_3^-$. Elle est reçue conditionnée sous forme Na$^+$. Préalablement à l'échange des Ba$^{2+}$ par des Ni$^{2+}$, la résine est conditionnée sous forme Ni$^{2+}$ à l'aide d'une solution saturée en $NiSO_4$. Une fois la résine conditionnée sous forme Ni$^{2+}$, on place 75 mL de résine dans une colonne en inox de 10 mm de rayon interne. La hauteur de lit est alors de 369 mm. Cette colonne est placée dans une étuve chauffée à 45°C pour permettre la solubilisation des sels pendant l'étape d'échange. Les 160 ml de solution chauffée à 45°C passent sur la colonne. Une fois que les 41 premiers millilitres de solution correspondant au volume mort sont passés, on récupère 150 ml de solution contenant le $Ni_{7/2}PW_{11}O_{39}$ à une concentration de 0,1 mol. L$^{-1}$. L'espèce $Ba_{7/2}PW_{11}O_{39}$ n'est présente qu'à l'échelle de trace. La solution est alors partiellement évaporée et concentrée. La concentration finale de la solution est de 0,16 mol. L$^{-1}$. Ces 100 mL de solution ainsi obtenus sont alors imprégnés sur un support commercial de type silice alumine synthétisée par voie cogel (380 m$^2$/g). Après une maturation de 12 heures, les extrudés sont séchés à 120°C une nuit, puis calcinés sous air à 450°C pendant 2 heures.

Sur ce catalyseur non sulfuré NiW / SiAl, la teneur en oxyde de tungstène est de 16,9 %, la teneur en oxyde de nickel est de 1,8 % et la teneur en $P_2O_5$ est de 0,5 %, ce qui correspond à un rapport Ni/W réel de 0,32 atomes/atomes et à un rapport P/W de 0,1. Ce catalyseur T2 est conforme à l'invention.

### Exemple 5 : Analyse des solutions d'imprégnation et des catalyseurs à l'état séché pour les exemples conformes à l'invention

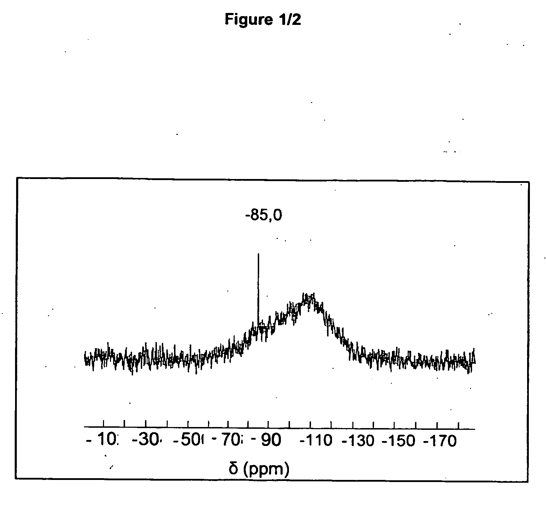

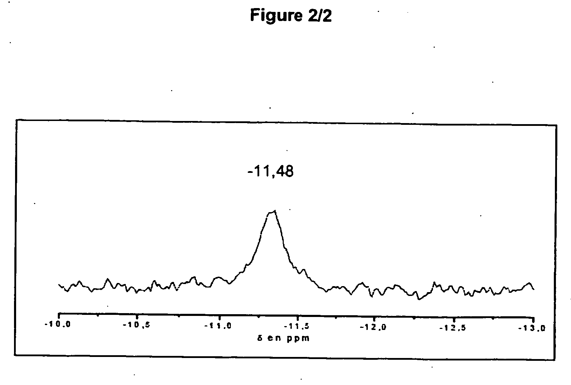

Les solutions d'imprégnation contenant respectivement $Ni_4SiW_{11}O_{39}$ et $Ni_{7/2}PW_{11}O_{39}$ préparées dans les exemples 3 et 4 ont été analysées par RMN $^{29}$Si dans le cas de l'exemple 3 et par RMN $^{31}$P dans le cas de l'exemple 4. Les spectres sont présentés respectivement dans les figures 1 et 2.

La figure 1 représente le spectre RMN $^{29}$Si de la solution contenant le $Ni_4SiW_{11}O_{39}$.

La figure 2 représente le spectre RMN $^{31}$P de la solution contenant le $Ni_{7/2}PW_{11}O_{39}$.

Dans les deux cas, il a été vérifié qu'aucun signal n'était visible entre 300 et 600 ppm, signe que l'on aurait préparé des espèces pour lesquelles le Ni serait en substitution d'un atome de W. D'autre part, si Ni était entré dans la structure, les signaux observés à -85,0 ppm en RMN $^{29}$Si et à -11,48 ppm en RMN $^{31}$P n'existeraient pas.

Enfin, les catalyseurs préparés dans les exemples 3 et 4 ont été caractérisés, à l'état séché, par spectroscopie Raman. Le tableau 1 regroupe les bandes principales et caractéristiques des liaisons terminales W-O des hétéropolyanions. Ces bandes de nombre d'onde inférieur à 1000 cm$^{-1}$ sont caractéristiques d'hétéropolycomposés lacunaires. Les nombres d'ondes de l'acide silicotungstite ($H_4SiW_{12}O_{40}$, HPC de type keggin) et de l'acide phosphotungstite ($H_3PW_{12}O_{40}$, HPC de type keggin) à l'origine des sels de Ni des HPA de type keggin lacunaires à base de W des exemples 3 et 4 présentent des nombres d'ondes égaux respectivement à 1011 cm$^{-1}$ et 1000 cm$^{-1}$.

Tableau 1 : Bandes principales identifiées par spectroscopie Raman des catalyseurs préparés dans les exemples 3 et 4 à l'état séché.

| catalyseur | Caractéristiques du catalyseur | Nombre d'onde de la bande principale (cm$^{-1}$) |
|---|---|---|
| T1 séché | NiSiW : Ni/W = 0,36, 17,1 % $WO_3$ (conforme) | 988 |
| T2 séché | NiPW : Ni/W = 0,36, 16,9% $WO_3$ (conforme) | 984 |

### Exemple 6 : Test en hydrogénation du toluène (molécule modèle aromatique) en présence d'aniline

Le test d'hydrogénation du toluène en présence d'aniline a pour but l'évaluation de l'activité hydrogénante des catalyseurs sulfurés supportés ou massiques, en présence d'$H_2S$ et sous pression d'hydrogène. L'isomérisation qui caractérise la fonction acide du catalyseur est inhibée par la présence de l'aniline, à faible température et/ou par la présence de $NH_3$ (issu de la décomposition de l'aniline) à plus forte température. L'aniline et/ou $NH_3$ vont réagir via une réaction acide base avec les sites acides du support. Les réactions d'isomérisation caractéristiques de l'acidité du support sont alors inexistantes.

Nous avons pris soin de réaliser la comparaison des 4 catalyseurs sur la même unité de test catalytique de façon à ne pas fausser les comparaisons par l'utilisation d'outils de test catalytique différents pouvant engendrer des résultats décalés.

Le test catalytique se déroule en phase gaz, dans un réacteur en lit fixe traversé. Le test se décompose en deux phases distinctes, la sulfuration et le test catalytique. Le test est réalisé à 60 bar.

Sulfuration :

Les catalyseurs sont sulfurés in situ en dynamique dans un réacteur tubulaire à lit fixe traversé d'une unité pilote de type catatest (constructeur Vinci Technologies), les fluides circulant de haut en bas. Les mesures d'activité hydrogénante sont effectuées immédiatement après la sulfuration sous pression sans remise à l'air avec la charge d'hydrocarbures qui a servi à sulfurer les catalyseurs. La charge de sulfuration est la même que celle du test.

Test catalytique :

La charge de test est composée de diméthyldisulfure (DMDS), de toluène, de cyclohexane et d'aniline. On mesure les activités catalytiques stabilisées de volumes égaux de catalyseurs ($4 \, cm^3$) et à une température de 350°C.

Les conditions opératoires du test sont les suivantes (en considérant une vaporisation totales et la loi des gaz parfaits) :

pour Ptot = 60 bar et T = 350°C :
$PpH_2$ = 36,62 bar
$PpNH_3$ = 0,09 bar
$PpH_2S$ = 2,16 bar
Pptoluène = 3,75 bar
Ppcyclohexane = 15,22 bar
VVH = 1 l/l/h
$H_2$/charge = 450

Des prélèvements de l'effluent sont analysés par chromatographie en phase gazeuse. Nous exprimons la conversion du toluène qui est une réaction d'ordre 1 dans nos conditions, par l'activité <u>hydrogénante (AH).</u> Cette conversion du toluène caractérise la fonction hydrogénante du catalyseur.

$$ AH_{ordre.1} = \ln \frac{100}{(100 - \%HYD_{toluène})} $$

où %HYD toluène correspond à la fraction de toluène converti.

Les performances catalytiques sont rassemblées dans le tableau 2. Elles sont exprimées en activité relative, en posant que celle du catalyseur B est égale à 100.

Tableau 2 : Activité hydrogénante relative des catalyseurs de l'invention. Elles sont exprimées en activité relative, en posant que celle du catalyseur B est égale à 100.

| catalyseur | Activité Hydrogénante (AH) relative à B |
|---|---|
| A (non conforme) | 97 |
| B (non conforme) | 100 |
| T1 (conforme) | 135 |
| T2 (conforme) | 129 |

Le tableau 2 montre le gain de pouvoir hydrogénant important obtenu sur les catalyseurs préparés à partir des hétéropolycomposés $Ni_4SiW_{11}O_{39}$ et $Ni_{7/2}PW_{11}O_{39}$ selon l'invention (catalyseurs T1 et T2 respectivement) par rapport aux catalyseurs qui sont leurs homologues de formulation mais qui sont préparés par des voies classiques, n'utilisant pas des sels de Ni d'hétéropolyanion de type keggin lacunaire contenant du W.

**Exemple 7 : évaluation des catalyseurs C1, C2, C3, C4 en hydrocraquage d'un distillat sous vide préalablemennt hydrotraité à haute pression.**

Les catalyseurs A, B, T1 et T2 dont les préparations sont décrites dans les exemples 1, 2, 3, 4 sont utilisés dans les conditions de l'hydrocraquage de distillats sous vide à pression élevée (14 MPa). La charge utilisée est une charge hydrotraitée. On simule un schéma où un catalyseur d'hydrotraitement est en enchaînement avec les catalyseurs A, B, T1 et T2

Les principales caractéristiques de la charge préalablement hydrotraitée sont fournies dans le tableau 3.

Tableau 3 : Caractéristiques du distillats sous vide hydrotraité

| Densité à 15°C | 0,896 |
|---|---|
| Soufre (% poids) | 0,08 (additivé à 2,1%) |
| Azote (ppm poids) | 280 (additivé à 1350 ppm) |
| Distillation simulée | |
| Point 10 % | 366°C |
| Point 50% | 442°C |
| Point 90% | 520°C |

L'unité de test catalytique comprend un réacteur en lit fixe, à circulation ascendante de la charge ("up-flow"). Dans le réacteur, 40 ml de catalyseur selon l'invention (A, B, T1, T2) sont introduits. Le catalyseur subit une étape de sulfuration in-situ avant réaction. Le catalyseur est sulfuré à 14 MPa, à 350°C au moyen d'un gasoil de distillation directe additionné de 2% poids de DMDS. Une fois la sulfuration réalisée, la charge décrite ci-dessus peut être transformée.

Les tests catalytiques ont été effectués dans les conditions suivantes :

pression totale : 14 MPa,
débit d'hydrogène : 1000 litres d'hydrogène gazeux par litre de charge injectée,
vitesse spatiale (VVH) est égale à 0,75 h$^{-1}$,
température : température requise pour atteindre 60% de conversion nette en sortie du réacteur. La conversion nette en produits ayant un point d'ébullition inférieurs à 370°C, notée CN 370°C, est prise égale à :

$$CN\ 370°C = [\ (\%\ de\ 370°C^-_{effluents}) - (\%\ de\ 370°C^-_{charge})\ ]\ /\ [\ 100 - (\%\ de\ 370°C^-_{charge})]$$

avec
% de 370°C- = teneur massique en composés ayant des points d'ébullition inférieurs à 370°C,

La sélectivité brute en distillats moyens (coupe 150-370°C), notée SB DM, est prise égale à : SB DM = [(fraction en 150 - 370 $_{effluents}$)] / [(% de 370°C$^-_{effluents}$)].

Les performances catalytiques sont exprimées par la température requise pour atteindre 60% conversion nette en produits ayant un point d'ébullition inférieurs à 370°C et par la sélectivité brute en distillats moyens (coupe 150-370°C). La conversion et la sélectivité sont exprimées à partir des résultats de distillation simulée.

Dans le tableau 4 suivant, nous avons reporté la température de réaction nécessaire pour obtenir 60% de conversion nette en 370°C- et la sélectivité brute pour les catalyseurs selon l'invention.

Tableau 4 : résultats catalytiques en hydrocraquage haute pression

| Catalyseur | Wh (h$^{-1}$) | Température nécessaire pour obtenir 60% de CN 370°C en % poids | SB DM en % poids |
|---|---|---|---|
| A | 0,75 | 406°C | 81,7 |
| B | 0,75 | 405°C | 81,9 |
| T1 | 0,75 | 402°C | 82,6 |
| T2 | 0,75 | 403°C | 82,5 |

Les exemples précédents montrent donc tout l'intérêt d'utiliser un catalyseur selon l'invention (T1, T2) pour réaliser l'hydrocraquage de charges hydrocarbonées. En effet, les catalyseurs selon l'invention permettent d'obtenir des conversions plus élevées de la charge sans perte de sélectivité en distillats moyens. Le pouvoir hydrogénant amélioré de la phase active grâce à l'utilisation de nouvelles structures de sel de Ni d'hétéropolyanion de type keggin lacunaire contenant du W permet d'hydrogénerplus de cycles aromatiques et donc de générer plus de molécules craquables et craquées, donc une conversion plus importante. Par ailleurs, à conversion donnée, comme la fonction hydrogénante est plus forte, les molécules sont moins surcraquées, moins d'essence et de gaz sont générés, ce qui augmente la sélectivité en Distillats Moyens.

**Revendications**

1. Hétéropolycomposé constitué d'un sel de Nickel d'un hétéropolyanion de type Keggin lacunaire comprenant dans sa structure du tungstène de formule

   $$Ni_{x+y/2}AW_{11-y}O_{39-5/2y}, zH_2O$$

   dans laquelle Ni est le nickel,
   A est choisi parmi le phosphore, le silicium et le bore,
   W est le tungstène,
   O est l'oxygène,
   y = 0 ou 2
   x = 3.5 si A est le phosphore,
   x = 4 si A est le silicium
   x = 4.5 si A est le bore
   et x = m/2+2 pour la suite,
   et z est un nombre compris entre 0 et 36 et m est égal 3 si A est le phosphore, m est égal 4 si A est le silicium et m est égal à 5 si A est le bore, dans lequel ledit hétéropolycomposé ne présente aucun atome de Nickel en substitution d'un atome de tungstène dans sa structure, lesdits atomes de Nickel étant placés en position de contre ion dans la structure dudit composé

2. Hétéropolycomposé selon la revendication 1 dans lequel ledit hétéropolycomposé présente la formule suivante

   $$Ni_xAW_{11}O_{39}, zH2O \qquad (I)$$

   dans laquelle Ni est le nickel,
   A est un groupement choisi parmi le phosphore, le silicium et le bore,
   W est le tungstène,
   O est l'oxygène,
   x est un nombre égal à 3,5 si le groupement A est le phosphore, égal à 4 si le groupement A est le silicium ou égal à 4,5 si le groupement A est le bore,
   et z est un nombre compris entre 0 et 36.

3. Hétéropolycomposé selon la revendication 2 dans lequel ledit hétéropolycomposé est le composé de formule :
   $Ni_4SiW_{11}O_{39}$.

4. Hétéropolycomposé selon la revendication 1 dans lequel ledit hétéropolycomposé présente la formule suivante

   $$Ni_{x+1}AW_9O_{34}, zH_2O \qquad (II)$$

   dans laquelle Ni est le nickel,
   A est un groupement choisi parmi le phosphore, le silicium et le bore,
   W est le tungstène,
   O est l'oxygène,
   x est un nombre égal à 3,5 si le groupement A est le phosphore, égal à 4 si le groupement A est le silicium ou égal à 4,5 si le groupement A est le bore, et z est un nombre compris entre 0 et 36.

5. Hétéropolycomposé selon la revendication 4 dans lequel ledit hétéropolycomposé est le composé de formule

$Ni_5SiW_9O_{34}$

6. Catalyseur comprenant ledit hétéropolycomposé selon l'une des revendications 1 à 5 et éventuellement au moins une matrice minérale poreuse acide.

7. Catalyseur selon la revendication 6 dans lequel ledit catalyseur se présente sous forme d'un catalyseur massique.

8. Catalyseur selon la revendication 6 dans lequel ledit catalyseur est un catalyseur supporté, le support étant formé d'au moins une matrice minérale poreuse acide, choisies parmi les silices alumines, les aluminosilicates cristallisés ou non, mésostructurés ou non, les alumines dopées, le groupe formé par la famille des tamis moléculaires cristallisés non zéolithiques.

9. Procédé de préparation dudit hétéropolycomposé constitué d'un sel de Nickel d'hétéropolyanions de type keggin lacunaire comprenant dans sa structure du tungstène selon l'une des revendications 1 à 5 comprenant les étapes suivantes :

   1) synthèse de l'hétéropolyanion de keggin contenant du tungstène de formule :

   $$Ba_{x+y/2}AW_{11-y}O_{39-5/2y}, zH_2O \qquad (I')$$

   dans lesquelles Ba est le baryum, A est choisi parmi le phosphore, le silicium et le bore, W est le tungstène, O est l'oxygène, y = 0 ou 2, x est un nombre égale à 3,5 si A est le phosphore, à 4 si A est le silicium ou à 4,5 si A est le bore et x = m/2+2 dans la suite et z est un nombre compris entre 0 et 30, par réaction des acides hétéropolytungstites $H_mAW_{12}O_{40}$ dans lesquels A est choisi parmi le phosphore, le silicium et le bore, H est l'hydrogène, W est le tungstène, O est l'oxygène et m est égal 3 si A est le phosphore, m est égal 4 si A est le silicium et m est égal à 5 si A est le bore, auxquels sont ajoutés x + y/2 équivalents d'hydroxyde de baryum (Ba(OH)2) pour former les composés de formule $Ba_{x+y/2}AW_{11-y}O_{39-5/2y}, zH_2O$ (I') selon l'équation suivante :

   $$H_mAW_{12}O_{40} + ((m/2 + 2) + y/2)\, Ba(OH)_2 \rightarrow Ba_{(m/2+2+y/2)}AW_{11-y}O_{39-5/2y} + (y+1)\, HWO_4^- +$$
   $$(y+1)\, H^+ + (m+1-y/2)\, H_2O$$

   2) formation du sel de Nickel de l'hétéropolyanion de keggin contenant du tungstène de formule $Ni_{x+y/2}AW_{11-y}O_{39-5/2y}\, zH_2O$ (I) à partir de l'hétéropolyanion de keggin contenant du tungstène issu de l'étape 1) par substitution des cations $Ba^{2+}$ par des cations $Ni^{2+}$ par échange ionique sur des résines échangeuses de cations, lesdites résines échangeuses de cations étant préalablement échangées aux cations $Ni^{2+}$.

10. Procédé selon la revendication 9 dans lequel l'hétéropolyanion de keggin contenant du tungstène préparé selon l'étape 1) est l'hétéropolyanion de formule : $Ba_xAW_{11}O_{39}, zH_2O$ et le sel de Nickel de l'hétéropolyanion de keggin contenant du tungstène est le composé de formule : $Ni_xAW_{11}O_{39}, zH_2O$.

11. Procédé selon la revendication 9 dans lequel l'hétéropolyanion de keggin contenant du tungstène préparé selon l'étape 1) est l'hétéropolyanion de formule : $Ba_{x+1}AW_9O_{34}, zH_2O$ et le sel de Nickel de l'hétéropolyanion de keggin contenant du tungstène est le composé de formule: $Ni_{x+1}AW_9O_{34}, zH_2O$,

12. Utilisation du catalyseur selon l'une des revendications 6 à 8 comprenant ledit hétéropolycomposé dans un procédé d'hydrocraquage, d'hydroconversion et/ou d'hydrotraitement.

**Claims**

1. A heteropolycompound constituted by a nickel salt of a lacunary Keggin type heteropolyanion comprising tungsten in its structure, with formula:

   $$Ni_{x+y/2}AW_{11-y}O_{39-5/2y}, zH_2O$$

   wherein Ni is nickel;

A is selected from phosphorus, silicon and boron;
W is tungsten;
O is oxygen;
y=0 or 2;
x=3.5 if A is phosphorus;
x=4 if A is silicon;
x=4.5 if A is boron;
and x-m/2+2 for the rest;
and z is a number in the range 0 to 36, and m equals 3 if A is phosphorus, m equals 4 if A is silicon and m equals 5 is A is boron, in which said heteropolycompound has no nickel atom in substitution for a tungsten atom in its structure, said nickel atoms being placed in the counter-ion position in the structure of said compound.

2. A heteropolycompound according to claim 1, in which said heteropolycompound has the following formula:

$$Ni_xAW_{11}O_{39}, zH_2O \quad (I)$$

wherein Ni is nickel;
A is a group selected from phosphorus, silicon and boron;
W is tungsten;
O is oxygen;
x is a number equal to 3.5 if the group A is phosphorus, equal to 4 if the group A is silicon or equal to 4.5 if the group A is boron;
and z is a number in the range 0 to 36.

3. A heteropolycompound according to claim 2, in which said heteropolycompound is the compound with formula: $Ni_4SiW_{11}O_{39}$.

4. A heteropolycompound according to claim 1, in which said heteropolycompound has the following formula:

$$Ni_{x+1}AW_9O_{34}) zH_2O \quad (II)$$

wherein Ni is nickel;
A is a group selected from phosphorus, silicon and boron;
W is tungsten;
O is oxygen;
x is a number equal to 3.5 if the group A is phosphorus, equal to 4 if the group A is silicon or equal to 4.5 if the group A is boron; and z is a number in the range 0 to 36.

5. A heteropolycompound according to claim 4, in which said heteropolycompound is the compound with formula $Ni_5SiW_9O_{34}$.

6. A catalyst comprising said heteropolycompound according to one of claims 1 to 5 and optionally at least one acidic porous mineral matrix.

7. A catalyst according to claim 6, in which said catalyst is in the form of a bulk catalyst.

8. A catalyst according to claim 6, in which said catalyst is a supported catalyst, the support being formed by at least one acidic porous mineral matrix selected from silica-aluminas, aluminosilicates, crystalline or otherwise, mesostructured or otherwise, doped aluminas, and the group formed by the category of non-zeolitic crystalline Molecular sieves.

9. A process for the preparation of said heteropolycompound, constituted by a nickel salt of lacunary Keggin type heteropolyanions comprising tungsten in its structure according to one of claims 1 to 5, comprising the following steps:

   1) synthesizing the Keggin heteropolyanion containing tungsten with formula:

   $$Ba_{x+y/2}AW_{11-y}O_{39-5/2y}, zH_2O \quad (I')$$

   in which Ba is barium, A is selected from phosphorus, silicon and boron, W is tungsten, O is oxygen, y=0 or 2, x is a number equal to 3.5 if A is phosphorus, equal to 4 if A is silicon or equal to 4.5 if A is boron, and x=m/2+2 for the rest and z is a number in the range 0 to 30, by reacting heteropolytungstic acids $H_mAW_{12}O_{40}$ in which A is selected from phosphorus, silicon and boron, H is hydrogen, W is tungsten, O is oxygen and m is equal to 3 if A is phosphorus, m is equal to 4 if A is silicon and m is equal to 5 if A is boron, to which are added x+y/2 equivalents of barium hydroxide $(Ba(OH)_2)$ to form compounds with formula $Ba_{x+y/2}AW_{11-y}O_{39-5/2y}$, $zH_2O$ (I'), in accordance with the following equation:

$$H_mAW_{12}O_{40} + ((m/2 + 2) + y/2)Ba(OH)_2 \rightarrow Ba_{(m/2+2+y/2)}AW_{11-y}O_{39-5/2y} + (y+1)HWO_4^-$$
$$+ (y+1)H^+ + (m+1-y/2)H_2O;$$

2) forming the nickel salt of the Keggin heteropolyanion containing tungsten with formula $Ni_{x+y/2}AW_{11-y}O_{39-5/2y}$, $zH_2O$ (1) from the Keggin heteropolyanion containing tungsten derived from step 1) by substituting $Ba^{2+}$ cations with $Ni^{2+}$ cations by ion exchange on cation exchange resins, said cation exchange resins having previously been exchanged with $Ni^{2+}$ cations.

10. A process according to claim 9, in which the Keggin heteropolyanion containing tungsten prepared in step 1) is the heteropolyanion with formula: $Ba_xAW_{11}O_{39}$, $zH_2O$ and the nickel salt of the heteropolyanion containing tungsten is the compound with formula: $Ni_xAW_{11}O_{39}$, $zH_2O$.

11. A process according to claim 9, in which the Keggin heteropolyanion containing tungsten prepared in step 1) is the heteropolyanion with formula: $Ba_{x+1}AW_9O34$, $zH_2O$ and the nickel salt of the heteropolyanion containing tungsten is the compound with formula: $Ni_{x+1}AW_9O_{34}$, $zH_2O$.

12. Use of a catalyst according to one of claims 6 to 8 comprising said heteropolycompound in a hydrocracking, hydroconversion and/or hydrotreatment process.

**Patentansprüche**

1. Heteropolyverbindung zusammengesetzt aus einem Nickelsalz eines unvollständigen Heteropolyanions, Typ Keggin, in seiner Struktur umfassend Wolfram der Formel:

$Ni_{x+y/2}AW_{11-y}O_{39-5/2y}$, $zH_2O$
bei, welcher Ni Nickel ist,
A ist ausgewählt zwischen Phosphor, Silizium und Bor,
W ist Wolfram,
O ist Sauerstoff,
y = 0 oder 2
x = 3,5 falls A Phosphor ist,
x = 4, falls A Silizium ist
x = 4,5, falls A Bor ist
und x = m/2+2 für die Sequenz
und z ist eine Zahl zwischen 0 und 36 und m ist gleich 3, falls A Phosphor ist, m ist gleich 4, falls A Silizium ist und m ist gleich 5, falls A Bor ist, bei dem die genannte Heteropolyverbindung keine Nickelatome in Substitution eines Wolframatoms in seiner Struktur aufweist, wobei die genannten Nickelatome sich in der Struktur der bezeichneten Verbindung in einer Gegenion-Lage befindet.

2. Heteropalyverbindung nach Anspruch 1, bei der die genannte Heteropolyverbindung folgende Formel aufweist:

$Ni_xAW_{11}O_{39}$, $zH_2O$    (I)

bei welcher Ni Nickel ist
ist eine zwischen Phosphor, Silizium und Bor ausgewählte Gruppe ist,
W ist Wolfram
O ist Sauerstoff
x ist eine Zahl gleich 3,5 falls Gruppe A Phosphor ist, gleich 4, falls Gruppe A Silizium ist oder gleich 4,5, falls Gruppe A Bor ist
und z ist eine zwischen 0 und 36 liegende Zahl.

3. Heteropolyverbindung nach Anspruch 2, bei der die genannte Heteropolyverbindung $Ni_4SiW_{11}O_{39}$ ist.

4. Heteropolyverbindung nach Anspruch 1, bei welcher die benannte Heteropolyverbindung folgende Formel aufweist:

$$Ni_{x+1}AW_9O_{34}, zH_2O \qquad (II)$$

bei welcher Ni Nickel ist,
A ist eine zwischen Phosphor, Silizium und Bor ausgewählte Gruppe,
W ist Wolfram
O ist Sauerstoff,
x ist eine Zahl gleich 3,5 falls Gruppe A Phosphor ist, gleich 4 falls Gruppe A Silizium ist oder gleich 4,5 falls Gruppe A Bor ist, und z ist eine zwischen 0 und 36 liegende Zahl.

5. Heteropolyverbindung nach Anspruch 4, bei welcher die besagte Heteropolyverbindung die Verbindung der Formel $Ni_5SiW_9O_{34}$ ist.

6. Katalysator welcher die genannte Heteropolyverbindung nach einer der Ansprüche 1 - 5, sowie eventuell auch eine saure poröse Mineralmatrix umfasst.

7. Katalysator nach Anspruch 6, bei welchem der genannte Katalysator in der Form eines Massenkatalysators vorliegt.

8. Katalysator nach Anspruch 6, wobei der benannte Katalysator ein geträgerter Katalysator ist und der Träger aus wenigstens einer sauren, poröse Mineralmatrix gebildet ist, ausgewählt zwischen Alumosilikat, kristallisiert oder nicht kristallisiert, mesostrukturiert oder nicht, dotierte Alumina, wobei die Gruppe gebildet ist durch die Familie von kristallisierten, nicht-zeolythischen Molekularsieben.

9. Verfahren für die Vorbereitung der genannten Heteropolyverbindung, zusammengesetzt aus einem unvollständigen Nickelsalz von Heteropolyanionen, Typ Keggin, wobei seine Wolframstruktur, nach einem der Ansprüche 1 - 5, folgende Stufen umfasst:

1) Synthese des Keggin Heteropolyanions, zusammengesetzt aus Wolfram folgender Formel:

$$Ba_{x+y/2}AW_{11-y}O_{39-5/2y}, zH_2O \qquad (I')$$

bei welcher Ba Barium ist, A ist zwischen Phosphor, Silizium und Bor ausgewählt, W ist gleich Wolfram, O ist Sauerstoff, y = 0 oder 2, x ist eine Zahl gleich 3,5 falls A Phosphor ist, gleich 4 falls A Silizium ist oder gleich 4,5 falls A Bor ist und x = m/2+2 in der Sequenz und z ist eine zwischen 0 und 30 eingegliederte Zahl, vermittels Reaktion heteropolywolframischer Säuren $H_mAW_{12}O_{40}$,
bei welchen A ausgewählt ist zwischen Phosphor, Silizium und Bor, H ist Wasserstoff, W ist Wolfram, O ist Sauerstoff und m ist gleich 3 falls A Phosphor ist, m ist gleich 4 falls A Silizium ist und m ist gleich 5 falls A Bor ist, zu welchen äquivalente x + y/2 von Borhydroxid $(BA(OH)_2)$ hinzugefügt werden um eine Verbindung der Formel $Ba_{x+/2}AW_{11-y}O_{39-5/2} zH_2O$ (I') folgender Gleichung zu erkalten,

$$H_mAW_{12}O_{40}+((m/2+2)+y/2)Ba(OH)_2) \rightarrow Ba(m/2+2y/2)AW_{11-y}O_{39-5/2y}+(y+1)$$

$$HWO^-_4+(y+1)H^++(m+1-y/2)H_2O$$

2) Präparation des Nickelsalzes aus dem Keggin-Heteropolyanion, enthaltend Wolfram der Formel $Ni_{x+y/2}AW_{11-y}O_{39-5/2y}, zH_2O$ (I) ausgehend von Keggin-Heteropolyanion, enthaltend in Stufe 1) gewonnenen Wolframs vermittels Substitution von Kation $Ba^{2+}$ durch Kation $Ni^{2+}$ durch Ionaustausch mit unvollständigen Kation-Austauschharzen, wobei die genannten Kation-Austauschharze vorher mit $Ni^{2+}$ Kationen ausgetauscht wurden.

21

10. Verfahren nach Anspruch 9, bei dem das Heteropolyanion von Keggin mit zufolge Stufe 1) vorbereitetem Wolfram, ein Heteropolyanion folgender Formel ist: $Ba_xAW_{11}O_{39}$. $zH_2O$ und das Nickelsalz des Heteroanions von Keggin mit einem Inhalt von Wolfram die Verbindung folgender Formel ist: $Ni_xAW_{11}O_{39}$, $zH_2O$.

11. Verfahren nach Anspruch 9, bei dem Heteropolyianion von Keggin, enthaltend mit laut Stufe 1) hergestellten Wolframs, ein Heteropolyanion folgender Formel ist: $Ba_{x+1}AW_9O_{34}$, $zH_2O$ und das Wolfram enthaltende Nickelsalz von Keggin-Heteropolyanion folgende Formel aufweist: $Ni_{x-1}AW_9O_{34}$, $zH_2O$.

12. Einsatz des nach einer de Ansprüche 6 - 8 bei dem die benannte Heteropolyverbindung in einem Hydrocracking-, Hydroumwandlung-und/oder Hydrobehandlungsverfahren enthalten ist.

**Figure 1/2**

**Figure 2/2**

-11,48

$\delta$ en ppm

-10.0  -10,5  -11.0  -11.5  -12,0  -12.5  -13.0

EP 2 315 721 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2547380 A
- FR 2749778 A
- FR 2764211 A

**Littérature non-brevet citée dans la description**

- **SANTOS I.C.M.S et al.** Association of Keggin-type anions with cationic meso-substituted porphyrins: synthesis, characterization and oxidative catalytic studies. *Journal of Molecular Catalysis,* 2005, vol. 231, 35-45
- **NIU J.Y. ; WANG Z.L ; WANG J.P.** Two one-dimensional monosubstituted heteropolytungstates based on Keggin anion units. *Journal of Solid State Chemistry,* 2004, vol. 177 (10), 3411
- **D.W. BRECK.** *Zéolite Molecular Sieves Structure, Chemistry and Uses,* 1973
- **J.SCHERZER.** Hydrocracking, Science and Technology. M.Dekker Incorporated, 1996